# EUROPEAN PATENT SPECIFICATION

(11) **EP 2 407 032 B1**
(45) Date of publication and mention of the grant of the patent: **03.07.2013**
(21) Application number: 10169437.0
(22) Date of filing: 13.07.2010
(51) Int. Cl.: A23G 3/00, A23G 3/56, A23G 3/54

(54) **Die formed lollipop filled with chocolate and method of manufacture thereof**
Im Gesenk geformter, mit Schokolade gefüllter Lutscher und Herstellungsverfahren dafür
Sucette formée en matrice remplie de chocolat et son procédé de fabrication

(43) Date of publication of application: 18.01.2012
(73) Proprietor: Perfetti Van Melle S.p.A., 20020 Lainate (IT)
(72) Inventor: Bottini, Alessandro, 20020, Lainate (MI) (IT); Hernandez Tantina, Jorge, 20020, Lainate (MI) (IT)
(74) Representative: Minoja, Fabrizio

(56) References cited:
- WO-A1-02/056698
- WO-A1-2008/079927
- US-A- 4 229 482
- Mintel International Group Ltd: "Lollipop", , June 2004 (2004-06), XP002610097, Retrieved from the Internet: URL:http://www.gnpd.com/sinatra/gnpd/searc h_results/&item_id=10173430 [retrieved on 2010-11-17]

## Description

The present invention concerns die formed lollipops filled with chocolate and method of manufacture thereof.

### Background of the invention

Two methods are currently available for industrial lollipop manufacturing: die forming and depositing.

A candy mass must be provided for both types of lollipops. This mass can be derived by a number of ingredients. In common sugar based lollipops sugar is mixed with glucose syrup and water and dissolved to form a syrup with 70-90% solids.

This syrup is cooked, usually under vacuum, to remove most of the water. The resulting product is a hot and semi liquid mass (usually at 130-160°C) with a moisture content of 1% - 3%, in case of hard candy lollipop, or higher, for a softer chew lollipop.

Syrup can be further added with other components to confer peculiar taste, appearance and mouthfeel. The addition can be performed before or after vacuum cooking.

Manufacturing methods between die formed and deposited lollipop diverge from this stage onward.

In deposited lollipop a suitable quantity of flowing candy mass is deposited in a mould. After partial cooling the stick is inserted. Resulting lollipops have an overall smooth outer surface.

Die formed lollipops, on the contrary, feature a characteristic rim onto the outer surface.

A rim is the distinctive feature of the die formed lollipop. In fact, when the plungers come one against the other during the die forming step, they don't touch each other. The candy material between the two convex regions, formed by the corresponding approaching concave plungers, protrudes from the lollipop body in a sort of rim or ring.

In die formed lollipops, the cooked syrup usually is cooled, and optionally pulled, to convert it from liquid into plastic or semi-plastic state.

The resulting plastic cooked candy composition is usually inserted in a batch roller or in an extruder's hopper or in another suitable device. At the end of the device a rope of candy is produced.

In centre filled lollipops a hollow rope is produced by standard equipment, i.e. batch roller with central pipe or extruder with concentric nozzle.

At a later process stage, stick insertion is very important. In fact, sticks of suitable material have to be manufactured and inserted as much as possible in the candy to assure a firm grip.

In case the edible part has not enough grip to the stick, consumers are exposed to a dangerous chocking hazard.

Sticks are generally made of plastics or paper. Plastic sticks are usually hollow: indentations or holes in the upper part are common means to enhance grip, because the candy mass tend to fill them thanks to the pressure experienced during the die forming step.

One typical feature of chocolate is the melting mouthfeel. In fact chocolate is solid at room temperature, but starts to soften above 30°C and to melt above 40°C. At 50°C most kinds of chocolate are completely melted and in the state of a viscous fluid.

In industrial production it is easier to deal with liquids than with solids. Liquids can be easily pumped and transported through pipelines and metered. Melted chocolate is currently employed for the manufacture of chocolate bars, chocolate coating, chocolate drops, pralines etc..

A particular kind of melted chocolate is the tempered one which contains crystallization seeds of cocoa butter in a particular allotropic form.

In order to manufacture centre filled lollipops containing chocolate, melted chocolate can be pumped along a central pipe inserted in the candy mass revolving in a batch roller. Alternatively, a coextruder can be used, with the head equipped with a concentric nozzle extruding the candy mass externally and pumping the liquid chocolate through the inner hole.

The chocolate filled rope is sized and die formed as described. Anyway, with this method, part of the chocolate filling drips through the little channels near the stick insertion region, and gives the impression of dirt outside the candy and onto the visible part of the stick.

Leaks can occur also through the central hole of the plastic stick giving the impression of a stick partially filled with dirt.

Chocolate liquid filling, in fact, experiences the pressure to which the lollipop is subject during die forming and tends to squeeze out.

Alternatively, chocolate solid pieces can be conveyed through mechanical means inside the hollow space of the candy rope formed by a batch roller or an extruder. Also in this case, the same problems occur, if the candy mass is higher in temperature than the melting point of the employed chocolate.

Melted chocolate, inside a lollipop piece, may need a period from minutes to hours to become solid, during which it can further leak out of the candy region. In fact the candy material has low thermal conductivity and in the cooling tunnel only the exterior is effectively cooled. This problem is enhanced with enhancing weight of the single piece.

From WO 02 056698 three-phase center-filled candy products are known that can comprise as inner layer a chocolate material.

There is therefore the need to find a method for the production of lollipops filled with chocolate, which does not present the disadvantages of the known methods.

### Summary of the invention

The present invention relates to a process for the production of a filled lollipop comprising the steps of:
a) providing at least one mass of cooked candy composition;
b) working the cooked candy composition in a hollow rope;
c) filling the hollow region of the rope with particles of a solid edible composition comprising a chocolate core;
d) optionally cutting the rope into pieces of desired weight;
e) inserting sticks into the rope or into the pieces of rope through the candy region and at least partially into the filled hollow region;
f) die forming the rope or the pieces of rope into lollipops defining a chocolate comprising region surrounded by an external candy region;
g) cooling the lollipops.

The present invention also relates to a filled lollipop obtainable by the above described process.

### Description of figures

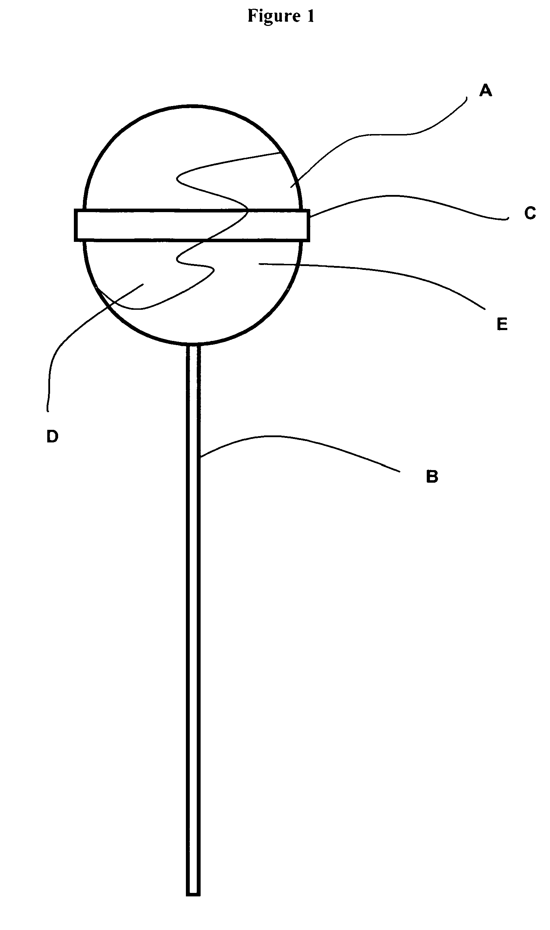

Figure 1 shows an exterior view of a lollipop according to the invention. In the Figure 1 A is the candy region, B is the stick, C is the rim, D represents the first colour and flavour of the candy mass, E represents the second colour and flavour of the candy mass.

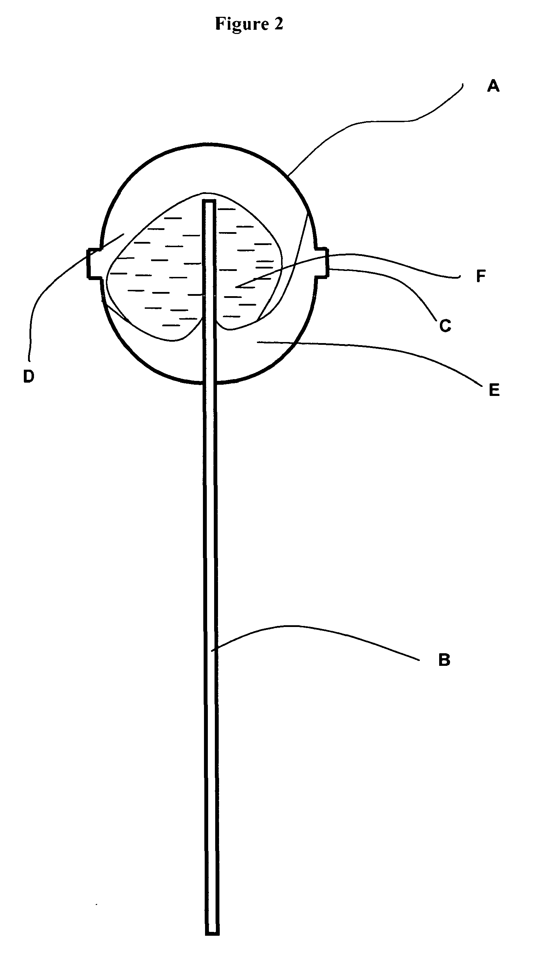

Figure 2 shows a cross section of a lollipop according to the invention. In the Figure 2 A is the candy region, B is the stick, C is the rim, D represents the first colour and flavour of the candy mass, E represents the second colour and flavour of the candy mass, F is the chocolate comprising region.

### Detailed description of the invention

The Applicant has found that die formed lollipops filled with chocolate can be manufactured using a process comprising the following steps:
a) providing at least one mass of cooked candy composition;
b) working the cooked candy composition in a hollow rope;
c) filling the hollow region of the rope with particles of a solid edible composition comprising a chocolate core;
d) optionally cutting the rope into pieces of desired weight;
e) inserting sticks into the rope or into the pieces of rope through the candy region and at least partially into the filled hollow region;
f) die forming the rope or the pieces of rope into lollipops defining a chocolate comprising region surrounded by an external candy region;
g) cooling the lollipops.

The chocolate does not leak during the step of stick insertion or die forming or afterwards.

According to the method of the invention, the hollow region of the rope is filled with particles of a solid edible composition comprising a chocolate core.

The hollow region can be partially filled or completely filled. In the latter case some air between the particles junction still remains.

In a preferred embodiment of the invention, the candy composition is warmer than the chocolate melting point. In particular the temperature of the candy composition is preferably higher than 30°C and still preferably ranges from 40°C to 90°C.

But, surprisingly, chocolate does not leak through the stick or the stick insertion point.

In a preferred embodiment of the invention, when the lollipop is eaten, the consumers have the smooth mouthfeel of one chocolate core inside the lollipop.

The mass of cooked candy composition is usually inserted in a batch roller or in an extruder's hopper or in another suitable device. At the end of the device a hollow rope of candy is produced.

In filled lollipop a hollow rope is produced by standard equipment, i.e. batch roller with central pipe or extruder with concentric nozzle.

At this stage the diameter of the rope is determined by the design of the previous equipment, and, usually, must be reduced before subsequent steps. For this scope the rope is sized by a series of sizing wheels revolving at increasing speed to the desired width, and then enters the die. Such desired width is determined by the die configuration and speed and by the final lollipop weight and is obtained changing the diameter of the sizing wheels.

Optionally, after entering the die, the rope is cut into a plurality of pieces weighing the desired final lollipop weight, even if not yet formed.

Before die forming, sticks are inserted, and, immediately after, the die plungers form the rope or the pieces of rope into lollipop shaped pieces.

Preferably the stick is inserted into candy mass and, in a preferred embodiment of the invention, is inserted through the first part of the candy region and through part or all the filling region, alternatively the stick can cross the first "lower" half of the candy region, all the filling region, and part of the second "higher" half of the candy region.

The pressure of plungers in the die is high enough to force the sugar mass (still is plastic state) to take the die shape.

In case of centre filled lollipops, during the stage of die forming, the rope or the pieces of rope are converted in single lollipops with an external shape complementing the plungers' shape and with a defined external candy region surrounding a central region.

Chain die and rotary die are common configurations of die used in lollipop manufacture, but any kind of die can be used for the present invention.

Lollipops are then cooled, wrapped and sold.

In another preferred embodiment of the invention, the aforementioned particles are combined into a single mass containing chocolate after step c) or during step f). In this embodiment the single particles are broken during the manufacturing process after being fed inside the hollow region of the rope. Preferably are broken during die forming.

According to another preferred embodiment, the single mass binds to the external candy region.

The chocolate core may be partially of completely melted during the process, after the particles are fed in the hollow region of the rope. During die forming the particles collapse, probably due to the pressure transferred through the plungers to the candy and the filling inside. The fraction of chocolate which is still solid may be eventually melted by the candy mass temperature. Anyway the melted chocolate is probably prevented from leaking by a plurality of crumbles of high melting composition forming a sort of maze through which flow is hampered.

Preferably, the particles of the solid edible composition comprising a chocolate core are manufactured by a process comprising the steps of:
h) providing chocolate comprising particles,
i) providing an high melting edible composition, and
j) covering the chocolate comprising particles with the high melting edible composition.

According to the invention, the chocolate is preferably chosen among: dark chocolate, milk chocolate, gianduja (nut chocolate), white chocolate, compound or imitation chocolate, aerated chocolate, and mixtures thereof.

In a preferred embodiment the chocolate comprising particles consist of a inner chocolate core at least partially surrounded by a high melting composition.

The high melting composition, preferably, has a melting point higher than the chocolate melting point and also higher than the candy mass temperature.

In a particularly preferred embodiment, the high melting composition has a percentage of solids higher than 90% at 40°C.

In another embodiment, the high melting composition has a melting point higher than 50°C, preferably higher than 100°C, still preferably higher than 130°C.

In a further embodiment, the high melting composition degrades before melting at a temperature higher than 50°C, preferably higher than 100°C, still preferably higher than 130°C.

The covering of the chocolate comprising particles with the high melting composition can be performed with any suitable device and method, such as spray dry, spray congealing, fluid bed coating, pan coating, co-depositing, dipping and combinations thereof.

In an alternative method, the particles of solid edible composition comprising a chocolate core are manufactured providing an extrudable chocolate comprising mass, providing an extrudable high melting edible composition, coextruding the chocolate comprising mass inside the high melting composition and working the extruded item into discrete pieces.

The chocolate containing particles can be of any shape and dimension. Most suitable dimension can be selected as a fraction of the dimension of the hollow region inside the candy rope that has to be filled.

In a preferred embodiment, a mixed granulometry is used with contemporary presence of bigger particles to fill most of the interior of the rope and smaller particles to fill the space between the big particles. Shape can vary according to the method of manufacture: convenient shapes are round or oblong, but also irregular shapes can be used.

Suitable materials for the high melting composition comprise: hard fat, carbohydrates, sugars, polyols, fibres, binders, jellying agents, proteins, waxes, milk, milk products or mixtures thereof.

Preferred jellying agents are chosen among: pectin, gum arabic, gelatine, cellulose, hydroxypropyl-methyl cellulose and mixtures thereof.

Preferred waxes are chosen among: carnauba, candelilla and beeswax and mixtures thereof.

Preferred sugars and carbohydrates are chosen among: sucrose, rice starch, maltodextrin, corn syrup and mixtures thereof.

Preferred polyols are chosen among isomalt, mannitol, maltitol, xylitol, sorbitol, lactitol and mixtures thereof.

The candy region can be made by any candy material comprising, for example, hard candy, soft candy, chewy candy, toffee, nougat.

The candy material can be sugar based or sugar free.

In one embodiment of the present invention the candy region is a hard candy.

In common sugar based hard candies, the bulk of the composition is made by sugar and glucose syrup.

Other ingredients can be used in place or added to the sugar and glucose syrup to provide the bulk of the composition. These ingredients may comprise polyols, hydrogenated starch hydrolysate, polydextrose, oligofructose, inulin, other kinds of simple sugars, high fructose corn syrup.

Other components are usually added to confer specific or unique mouthfeel, appearance and taste, such as milk derivatives, acids, salts (comprising table salt), colours, intensive sweeteners, emulsifiers, flavours, fruit and vegetable derivatives, vitamins, mineral supplements, medicaments and other food additives, ingredients and combinations. The addition can be performed before or after vacuum cooking.

In a particularly preferred embodiment, the candy is a hard candy comprising milk ingredients.

Milk ingredients comprise, for example, concentrated milk, cream, cream powder, whey powder, butter, caseins and combination thereof.

Colours may comprise natural colouring foodstuff, natural pigments, artificial colours, lake colours and combinations.

Flavours may comprise essential oils, flavouring preparations, natural flavouring substances, artificial flavours and combinations thereof.

The invention also relates to filled lollipop obtainable by the above described process.

Such a lollipop has the advantage of an outstanding consumer appeal, without the negative impression of dirt given by chocolate on the exterior surface of the lollipop or on the visible part of the stick, even in traces.

Lollipops can be provided in a number of different shapes, such as round, oblong, fruit shaped etc.

The external shape and taste can be enriched by the presence of two or more candy regions with different colours and flavours. Different patterns can be achieved with means which are known to those skilled in the art.

The chocolate comprising region is placed in the central region of the lollipop, surrounded by the external candy region and it is solid at room temperature.

The melting point is inhomogeneous across the chocolate region with higher and lower values in different points.

For the scope of the invention, the term chocolate comprises any kind of chocolate.

Chocolate is derived from cocoa pods. Finished chocolate traditionally consists of: cocoa powder, cocoa butter (referred as cocoa solids singularly and in combination), sugar, milk solids, flavours (usually vanilla). Many changes can be done to the basic ingredients in terms of origin and variety of the cocoa plant, percentage composition of the final chocolate recipe, and different further ingredients added in order to give different types of chocolate.

According to the invention, the term chocolate means any kind of chocolate, comprising sugar-free chocolate.

For example, traditional types of chocolate includes dark chocolate, milk chocolate, white chocolate and gianduja.

Also flavoured chocolate may be employed. Examples are chilly dark chocolate, strawberry flavoured milk chocolate, etc..

Also compound, or imitation, chocolate may be used. In imitation chocolate some cocoa deriving ingredients (e.g. cocoa butter) are substituted with cheaper ones (e.g. coconut oil).

Other ingredients (e.g. nut pieces, candied orange, etc.) can be used to further enrich chocolate.

Preferably, the chocolate comprising region is composed by one or more discrete regions with cocoa solids and by more than one discrete regions without cocoa solids.

Still more preferably the chocolate comprising region is composed by one discrete region with cocoa solids and more than one discrete regions without cocoa solids.

The regions without cocoa solids are embedded into the region with cocoa solids.

Preferably, the regions with cocoa solids comprise dark chocolate, milk chocolate, gianduja nut chocolate, white chocolate, compound or imitation chocolate, aerated chocolate, and mixtures thereof.

The discrete regions without cocoa solids may comprise hard fat, carbohydrates, sugars, polyols, fibres, binders, jellying agents, proteins, waxes, milk, milk products or mixtures thereof.

Preferably, the discrete regions without chocolate have a melting point higher than chocolate melting point. In a particularly preferred embodiment the discrete regions without chocolate have a percentage of solids higher than 90% at 40°C.

In another embodiment, the discrete regions without chocolate have a melting point higher than 50°C; preferably higher than 100°C, still preferably higher than 130°C.

In a further embodiment, the discrete regions without chocolate degrade before melting at a temperature higher than 50°C; preferably higher than 100°C, still preferably higher than 130°C.

The following examples further describe the invention.

### Examples

### Example 1 - Preparation of a die formed lollipop

A syrup with the following composition is provided with conventional equipment:

**Table 1**

| **Ingredient** | **Percentage** |
|---|---|
| Sugar | 43 |
| Glucose syrup | 35 |
| Water | 22 |

The syrup is cooked in a batch cooker and added with color and flavor to give the following candy composition:

**Table 2**

| **Ingredient** | **Percentage** |
|---|---|
| Sugar | 53,72 |
| Glucose syrup | 43,72 |
| Cochineal | 0,01 |
| Strawberry Flavour | 0,05 |
| Citric acid | 1 |
| Water | 1,5 |

100 kg of the candy composition is brought to a temperature higher than 40°C but lower than 90°C and is inserted in a batch roller equipped with a central teflon lined pipe to produce a hollow rope.

Particles of solid edible composition comprising a chocolate core are inserted inside the pipe with a continuous screw. The screw has a speed adjustment device to regulate the quantity of filling inside the hollow region.

A rope, filled with particles and with a total diameter of 9 cm, is brought to 3 cm by an horizontal rope-sizer equipped with five sizing wheels.

The rope is continuously fed in a rotary die equipped with a stick insertion unit.

Sticks are inserted through the candy region and approximately 3/4 of the central region filled with chocolate and the rope is immediately formed by plungers into single lollipops.

The lollipops have two convex half-spheres separated by a central rim and weigh 12 g each. Percentage of filling is 10% by volume and 8% by weight.

Formed lollipops are cooled in a continuous cooling tunnel with controlled temperature and humidity.

### Example 2 - Manufacture of solid edible compositions comprising a chocolate core

A granular chocolate with particle size between 100 and 2000 µm is fed in a fluid bed coating device.

The chocolate part consists of flavoured dark chocolate with the following composition:

**Table 3**

| **Ingredient** | **Percentage** |
|---|---|
| sugar | 31 |
| cocoa mass | 55 |
| cocoa butter | 13,4 |
| soya lecithin | 0,5 |
| chilli flavour | 0,1 |

Vegetable fat with 90% solids at 40°C is melted at 55°C in a oil jacketed tank.

The chocolate is coated with the fat till the following composition is reached:

**Table 4**

| **Ingredient** | **Percentage** |
|---|---|
| **chocolate** | 60 |
| **fat** | 40 |

## Claims

1. Process for the production of a filled lollipop comprising the steps of:
a) providing at least one mass of cooked candy composition;
b) working the cooked candy composition in a hollow rope;
c) filling the hollow region of the rope with particles of a solid edible composition comprising a chocolate core;
d) optionally cutting the rope into pieces of desired weight;
e) inserting sticks into the rope or into the pieces of rope through the candy region and at least partially into the filled hollow region;
f) die forming the rope or the pieces into lollipops defining a chocolate comprising region surrounded by an external candy region;
g) cooling the lollipops.

2. Process as claimed in claim 1, wherein the temperature of the candy composition in the steps a) through f) is higher than the melting point of the chocolate.

3. Process as claimed in claim 2, wherein the temperature of the candy composition is higher than 30°C.

4. Process as claimed in claim 3, wherein the temperature of the candy composition is higher than 40°C but lower than 90°C.

5. Process as claimed in claim 1, wherein the step b) is provided by an extruder or a batch roller.

6. Process as claimed in any one of the claims 1 to 5, wherein before the step d) the rope diameter is adjusted to the desired width by a series of rope seizers wheels.

7. Process as claimed in any one of the claims 1 to 6, wherein steps d) and e) are accomplished with a die chosen from rotary dies or chain dies.

8. Process as claimed in any one of the claims 1 to 7, wherein the particles comprising a chocolate core are combined in a single mass after step c).

9. Process as claimed in claims 8, wherein the particles comprising a chocolate core are combined in a single mass during step f).

10. Process as claimed in claim 8 or 9, wherein the single mass binds to the candy region.

11. Process as claimed in claim 1, wherein the particles of step c) are manufactured through a process comprising the steps of:
h) providing particles comprising chocolate;
i) providing a high melting composition;
j) covering the chocolate particles of step h) with the composition i).

12. Process as claimed in claim 11, wherein the high melting composition has a percentage of solids higher than 90% at 40°C.

13. A filled lollipop obtainable by the process of claims 1-12.

## Patentansprüche

1. Verfahren zur Herstellung eines gefüllten Lutschers, umfassend die Schritte:
a) Bereitstellen mindestens einer Masse einer gekochten Bonbon-Zusammensetzung;
b) Verarbeiten der gekochten Bonbon-Zusammensetzung zu einem hohlen Strangs;
c) Befüllen der hohlen Region des Strangs mit Partikeln einer festen, essbaren Zusammensetzung, die einen Kern aus Schokolade umfasst;
d) wahlweise das Schneiden des Strangs in Stücke eines gewünschten Gewichts;
e) Hineinstecken von Stielen in den Strang oder in die Stücke des Strangs durch die Bonbon-Region und mindestens teilweise in die gefühlte Hohlregion;
f) Formen des Strangs oder der Stücke des Strangs zu Lutschern, die eine Schokolade umfassende Region aufweisen und von einer externen Bonbon-Region umgeben ist;
g) Kühlen der Lutscher.

2. Verfahren nach Anspruch 1, worin in den Schritten a) bis f) die Temperatur der Bonbon-Zusammensetzung höher ist als die Schmelztemperatur der Schokolade.

3. Verfahren nach Anspruch 2, worin die Temperatur der Bonbon-Zusammensetzung höher als 30 °C ist.

4. Verfahren nach Anspruch 3, worin die Temperatur der Bonbon-Zusammensetzung höher als 40 °C aber geringer als 90 °C ist.

5. Verfahren nach Anspruch 1, worin Schritt b) durch einen Extruder oder einen Kegelroller erfolgt.

6. Verfahren nach einem der Ansprüche 1 bis 5, worin die gewünschte Breite des Strangdurchmessers durch eine Reihe von Strangautomatenrädern vor Schritt d) eingestellt wird.

7. Verfahren nach einem der Ansprüche 1 bis 6, worin die Schritte d) und e) mit einem Stempel, ausgewählt aus Rotationsstanzen oder Kettenstanzen, durchgeführt wird.

8. Verfahren nach einem der Ansprüche 1 bis 7, worin die Partikel, die einen Kern aus Schokolade umfassen, nach Schritt c) zu einer einzigen Masse verbunden werden.

9. Verfahren nach Anspruch 8, worin die Partikel, die einen Kern aus Schokolade umfassen, während des Schrittes f) zu einer einzigen Masse verbunden werden.

10. Verfahren nach Anspruch 8 oder 9, worin die einzige Masse an die Bonbon-Region bindet.

11. Verfahren nach Anspruch 1, worin die Partikel aus Schritt c) durch ein Verfahren hergestellt werden, umfassend die Schritte:
h) Bereitstellen von Partikeln, umfassend Schokolade;
i) Bereitstellen einer hochschmelzenden Zusammensetzung;
j) Umhüllen der Schokoladenpartikel von Schritt h) mit der Zusammensetzung i).

12. Verfahren nach Anspruch 11, worin die hochschmelzende Zusammensetzung bei 40 °C einen Feststoffanteil von mehr als 90% aufweist.

13. Ein gefüllter Lutscher, erhalten durch ein Verfahren nach einem der Ansprüche 1 bis 12.

## Revendications

1. Procédé pour la production d'une sucette fourrée comprenant les étapes consistant à :
a) fournir au moins une masse de composition de confiserie cuite ;
b) travailler la composition de confiserie cuite en une corde creuse ;
c) remplir la région creuse de la corde avec des particules d'une composition solide comestible comprenant un noyau de chocolat ;
d) éventuellement découper la corde en morceaux de poids souhaité ;
e) insérer des bâtonnets dans la corde ou dans les morceaux de corde à travers la région de confiserie et au moins partiellement dans la région creuse fourrée ;
f) mouler par une filière la corde ou les morceaux en sucettes définissant une région comprenant du chocolat, entourée d'une région de confiserie externe ;
g) refroidir les sucettes.

2. Procédé selon la revendication 1, dans lequel la température de la composition de confiserie dans les étapes a) à f) est supérieure au point de fusion du chocolat.

3. Procédé selon la revendication 2, dans lequel la température de la composition de confiserie est supérieure à 30°C.

4. Procédé selon la revendication 3, dans lequel la température de la composition de confiserie est supérieure à 40°C, mais inférieure à 90°C.

5. Procédé selon la revendication 1, dans lequel l'étape b) est fournie par une extrudeuse ou un rouleau en lots.

6. Procédé selon l'une quelconque des revendications 1 à 5, dans lequel avant l'étape d), le diamètre de la corde est ajusté à la largeur souhaitée par une série de roues de calibrage de corde.

7. Procédé selon l'une quelconque des revendications 1 à 6, dans lequel les étapes d) et e) sont réalisées avec une filière choisie parmi les matrices rotatives ou les matrices à chaînes.

8. Procédé selon l'une quelconque des revendications 1 à 7, dans lequel les particules comprenant un noyau de chocolat sont combinées en une masse unique, après l'étape c).

9. Procédé selon la revendication 8, dans lequel les particules comprenant un noyau de chocolat sont combinées en une masse unique pendant l'étape f).

10. Procédé selon la revendication 8 ou 9, dans lequel la masse unique se lie à la région de confiserie.

11. Procédé selon la revendication 1, dans lequel les particules de l'étape c) sont fabriquées au moyen d'un procédé comprenant les étapes consistant à :
h) fournir des particules comprenant du chocolat ;
i) fournir une composition à température de fusion élevée ;
j) recouvrir les particules de chocolat de l'étape avec la composition i).

12. Procédé selon la revendication 11, dans lequel la composition à température de fusion élevée a un pourcentage de matières solides supérieur à 90 % à 40°C.

13. Sucette fourrée pouvant être obtenue par le procédé selon les revendications 1 à 12.
